# EUROPÄISCHE PATENTSCHRIFT

(11) **EP 1 976 107 B1**
(45) Veröffentlichungstag und Bekanntmachung des Hinweises auf die Patenterteilung: **09.06.2010**
(21) Anmeldenummer: 07105313.6
(22) Anmeldetag: 30.03.2007
(51) Int. Cl.: H02M 7/483

(54) **Schaltzelle sowie Umrichterschaltung zur Schaltung einer Vielzahl von Spannungsniveaus mit einer solchen Schaltzelle**
Switching cell and multilevel converter comprising it
Cellule de commutation et dispositif de convertisseur à plusieurs niveaux doté dudit cellule de commutation

(43) Veröffentlichungstag der Anmeldung: 01.10.2008
(73) Patentinhaber: ABB RESEARCH LTD., 8050 Zürich (CH)
(72) Erfinder: Barbosa, Peter, CH-5405 Dättwil (CH); Steimer, Peter, CH-5420 Ehrendingen (CH); Chaudhuri, Toufann, CH-1260 Nyon (CH)
(74) Vertreter: ABB Patent Attorneys

(56) Entgegenhaltungen:
- MEYNARD T A ET AL: "Modeling of Multilevel Converters" IEEE TRANSACTIONS ON INDUSTRIAL ELECTRONICS, IEEE SERVICE CENTER, PISCATAWAY, NJ, US, Bd. 44, Nr. 3, Juni 1997 (1997-06), XP011023263 ISSN: 0278-0046
- DONZEL A ET AL: "New control law for capacitor voltage balance in multilevel inverter with switching rate control (CVC)" INDUSTRY APPLICATIONS CONFERENCE, 2000. CONFERENCE RECORD OF THE 2000 IEEE 8-12 OCTOBER 2000, PISCATAWAY, NJ, USA,IEEE, Bd. 3, 8. Oktober 2000 (2000-10-08), Seiten 2037-2044, XP010521390 ISBN: 0-7803-6401-5
- GUILLAUME GATEAU ET AL: "Multicell Converters: Active Control and Observation of Flying-Capacitor Voltages" IEEE TRANSACTIONS ON INDUSTRIAL ELECTRONICS, IEEE SERVICE CENTER, PISCATAWAY, NJ, US, Bd. 49, Nr. 5, Oktober 2002 (2002-10), XP011073764 ISSN: 0278-0046
- WILKINSON R H ET AL: "Voltage unbalance in the multicell converter topology" 2002 IEEE AFRICON 6TH. AFRICON CONFERENCE IN AFRICA. UNIVERSITY OF PRETORIA, GEORGE, SOUTH AFRICA, OCT. 2 - 4, 2002, IEEE AFRICON CONFERENCE IN AFRICA, NEW YORK, NY : IEEE, US, Bd. VOL. 1 OF 2. CONF. 6, 2. Oktober 2002 (2002-10-02), Seiten 759-764, XP010622908 ISBN: 0-7803-7570-X

## Beschreibung

### Technisches Gebiet

Die Erfindung bezieht sich auf das Gebiet der Umrichterschaltungen. Sie geht aus von einer Schaltzelle für eine Umrichterschaltung zur Schaltung einer Vielzahl von Spannungsniveaus gemäss dem Oberbegriff des unabhängigen Anspruchs 1.

### Stand der Technik

Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen an Phasen eines an die Umrichterschaltung gängigerweise angeschlossenen elektrischen Wechselspannungsnetzes zu erzeugen und zum anderen mit einer möglichst geringen Anzahl an elektronischen Bauelementen möglichst grosse Leistungen zu übertragen. Eine geeignete Umrichterschaltung zur Schaltung einer Vielzahl von Schaltspannungsniveaus ist in der DE 692 05 413 T2 angegeben. Darin ist eine Schaltzelle mit einer Schaltgruppe angegeben, wobei die Schaltgruppe einen ersten und einen zweiten ansteuerbaren bidirektionalen Leistungshalbleiterschalter und einen Kondensator aufweist. Der erste und der zweite ansteuerbare bidirektionale Leistungshalbleiterschaker ist jeweils durch einen Bipolartransistor mit isoliert angeordneter Ansteuerelektrode (IGBT - Insufated Gate Bipolartransistor) und durch eine dem Bipolartransistor antiparallel geschaltete Diode gebildet.

In "Modeling of Multilevel Converter", IEEE transactions on industrial electronics, Bd. 44, Nr. 3, Juni 1997 sowie in "New Control Law for Capacitor Voltage Balance in Multilevelinverter with switching control (CVC)", industry applications conference 2000, conference record of the 2000 IEEE 8-12 October 2000, Bd. 3, 8. Oktober 2000 ist ebenfalls eine Schaltzelle mit einer Schaltgruppe angegeben, wobei die Schaltgruppe durch einen ersten und einen zweiten ansteuerbaren bidirektionalen Leistungshalbleiterschalter und einen Kondensator gebildet ist.

Problematisch bei einer Schaltzelle der Umrichterschaltung zur Schaltung einer Vielzahl von Schaltspannungsniveaus nach der DE 692 05 413 T2 ist, dass die in der Schaltzelle während des Betriebs gespeicherte elektrische Energie sehr hoch ist. Da die elektrische Energie im Kondensator der Schaltzelle gespeichert ist, muss der Kondensator und die Leistungshalbleiterschalter für diese elektrische Energie, d.h. bezüglich der Spannungsfestigkeit (Blockierspannung) und/oder der Kapazität, ausgelegt werden. Dies bedingt aber Kondensatoren mit grosser Baugrösse, die entsprechend teuer sind. Zudem benötigt die Schaltzelle und damit auch die Umrichterschaltung aufgrund der bezüglich der Baugrösse grossen Kondensatoren viel Platz, so dass ein platzsparender Aufbau, wie er für viele Anwendungen, beispielsweise für Traktionsanwendungen, gefordert ist, nicht möglich ist. Zudem werden teuere und aufwendige Leistungshalbleiterschalter benötigt, die eine hohe Spannungsfestigkeit haben. Weiterhin bewirkt der Einsatz der bezüglich der Baugrösse grossen Kondensatoren einen hohen Montage- und Wartungsaufwand. Darüberhinaus ist die Umrichterschaltung zur Schaltung einer Vielzahl von Schaltspannungsniveaus nach der DE 692 05 413 T2 aufgrund der ausschliesslichen Verwendung von Bipolartransistoren mit isoliert angeordneter Ansteuerelektrode als ansteuerbare Leistungshalbleiterschalter anfällig gegen hohe Spannungen, insbesondere gegen Überspannungen, und weist zudem erhebliche Wirkleistungsveriuste auf.

### Darstellung der Erfindung

Aufgabe der Erfindung ist es deshalb, eine Schaltzelle anzugeben, die möglichst wenig elektrische Energie während ihres Betriebes speichert und platzsparend realisiert werden kann. Weiterhin ist es eine Aufgabe der Erfindung, eine Umrichterschaltung zur Schaltung einer Vielzahl von Spannungsniveaus anzugeben, die ebenfalls möglichst wenig elektrische Energie während ihres Betriebes speichert, platzsparend realisiert werden kann, weitestgehend unempfindlich gegen hohe Spannungen und Fehlerzustände ist und geringe Wirkleistungsverluste aufweist. Diese Aufgaben werden durch die Merkmale des Anspruchs 1 und des Anspruchs 6 gelöst. In den abhängigen Ansprüchen sind vorteilhafte Weiterbildungen der Erfindung angegeben.

Die erfindungsgemässe Schaltzelle umfasst eine Schaltgruppe, wobei die Schaltgruppe einen ersten und einen zweiten ansteuerbaren bidirektionalen Leistungshalbleiterschalter und einen Kondensator aufweist. Nach der Erfindung weist die Schaltgruppe zudem einen dritten, vierten, fünften und sechsten ansteuerbaren bidirektionalen Leistungshalbleiterschalter auf, wobei der erste ansteuerbare bidirektionale Leistungshalbleiterschalter antiseriell zu dem zweiten ansteuerbaren bidirektionalen Leistungshalbleiterschalter geschaltet ist und der dritte ansteuerbare bidirektionale Leistungshalbleiterschalter antiseriell zu dem vierten ansteuerbaren bidirektionalen Leistungshalbleiterschalter geschaltet ist. Der Kondensator ist weiterhin mit dem Verbindungspunkt des ersten ansteuerbaren bidirektionalen Leistungshalbleiterschalters mit dem zweiten ansteuerbaren bidirektionalen Leistungshalbleiterschalter und mit dem Verbindungspunkt des dritten ansteuerbaren bidirektionalen Leistungshalbleiterschalters mit dem vierten ansteuerbaren bidirektionalen Leistungshalbleiterschalter verbunden. Der fünfte ansteuerbare bidirektionale Leistungshalbleiterschalter ist zudem mit dem Verbindungspunkt des ersten ansteuerbaren bidirektionalen Leistungshalbleiterschalters mit dem zweiten ansteuerbaren bidirektionalen Leistungshalbleiterschalter und mit dem vierten ansteuerbaren bidirektionalen Leistungshalbleiterschalter verbunden, wobei der sechste ansteuerbare bidirektionale Leistungshalbleiterschalter mit dem Verbindungspunkt des dritten ansteuerbaren bidirektionalen Leistungshalbleiterschalters mit dem vierten ansteuerbaren bidirektionalen Leistungshalbleiterschalter und mit dem zweiten ansteuerbaren bidirektionalen Leistungshalbleiterschalter verbunden ist. Darüber hinaus sind ein erster und ein zu dem ersten in Serie geschalteter zweiter kapazitiver Energiespeicher vorgesehen, wobei der erste ansteuerbare bidirektionale Leistungshalbleiterschalter und der dritte ansteuerbare bidirektionale Leistungshalbleiterschalter am Verbindungspunkt des ersten kapazitiven Energiespeichers mit dem zweiten kapazitiven Energiespeicher miteinander verbunden sind. Mittels der ansteuerbaren bidirektionalen Leistungshalbleiterschalter, des Kondensators, der beiden kapazitiven Energiespeicher und deren vorstehend beschriebenen Verbindungen zueinander und untereinander, kann die gespeicherte elektrische Energie der Schaltzelle vorteilhaft gering gehalten werden, wobei die Spannungsfestigkeit bzw. die Blockierspannung der einzelnen ansteuerbaren bidirektionalen Leistungshalbleiterschalter mit Vorteil nur der Spannung des Kondensators, die maximal am Kondensator anliegt, entsprechen muss und die einzelnen ansteuerbaren bidirektionalen Leistungshalbleiterschalter bezüglich ihre Blockierspannung demnach lediglich auf diese Spannung ausgelegt sein müssen. Aufgrund der geringen gespeicherten elektrischen Energie der Schaltzelle insgesamt, kann diese klein gehalten werden, da der Kondensator der Schaltzelle nur für diese kleine zu speichernde elektrische Energie, d.h. bezüglich ihrer Spannungsfestigkeit und/oder ihrer Kapazität, ausgelegt werden muss. Aufgrund der daraus resultierenden geringen Baugrösse des Kondensators benötigt die Schaltzelle sehr wenig Platz. Ferner kann durch die geringe Baugrösse auch der Montage- und Wartungsaufwand gering gehalten werden.

Die erfindungsgemässe Umrichterschaltung zur Schaltung einer Vielzahl von Spannungsniveaus umfasst die erfindungsgemässe Schaltzelle und zusätzlich eine Phasenschaltzelle, wobei die Phasenschaltzelle einen ersten, zweiten, dritten, vierten, fünften und sechsten ansteuerbaren bidirektionalen Leistungshalbleiterschalter aufweist und der erste ansteuerbare bidirektionale Leistungshalbleiterschalter der Phasenschaltzelle seriell zu dem zweiten ansteuerbaren bidirektionalen Leistungshalbleiterschalter der Phasenschaltzelle geschaltet ist, der dritte ansteuerbare bidirektionale Leistungshalbleiterschalter der Phasenschaltzelle seriell zu dem vierten ansteuerbaren bidirektionalen Leistungshalbleiterschalter der Phasenschaltzelle geschaltet ist und der fünfte ansteuerbare bidirektionale Leistungshalbleiterschalter der Phasenschaltzelle mit dem Verbindungspunkt des ersten ansteuerbaren bidirektionalen Leistungshalbleiterschalter mit dem zweiten ansteuerbaren bidirektionalen Leistungshalbleiterschalter der Phasenschaltzelle verbunden ist. Der sechste ansteuerbare bidirektionale Leistungshalbleiterschalter der Phasenschaltzelle ist ferner mit dem Verbindungspunkt des dritten ansteuerbaren bidirektionalen Leistungshalbleiterschalters mit dem vierten ansteuerbaren bidirektionalen Leistungshalbleiterschalter der Phasenschaltzelle verbunden. Zudem ist der erste ansteuerbare bidirektionale Leistungshalbleiterschalter der Phasenschaltzelle mit dem ersten kapazitiven Energiespeichers der Schaltzelle verbunden, wobei der zweite ansteuerbare bidirektionale Leistungshalbleiterschalter der Phasenschaltzelle mit dem Verbindungspunkt des sechsten ansteuerbaren bidirektionalen Leistungshalbleiterschalter mit dem zweiten ansteuerbaren bidirektionalen Leistungshalbleiterschalter der Schaltzelle verbunden ist. Der vierte ansteuerbare bidirektionale Leistungshalbleiterschalter der Phasenschaltzelle ist weiterhin mit dem zweiten kapazitiven Energiespeichers der Schaltzelle verbunden, wobei der dritte ansteuerbare bidirektionale Leistungshalbleiterschalter der Phasenschaltzelle mit dem Verbindungspunkt des fünften ansteuerbaren bidirektionalen Leistungshalbleiterschalter mit dem vierten ansteuerbaren bidirektionalen Leistungshalbleiterschalter der Schaltzelle verbunden ist. Mittels der ansteuerbaren bidirektionalen Leistungshalbleiterschalter der Phasenschaltzelle und der erfindungsgemässen Schaltzelle kann die gespeicherte elektrische Energie der damit realisierten Umrichterschaltung vorteilhaft gering gehalten werden. Aufgrund der geringen gespeicherten elektrischen Energie der Umrichterschaltung insgesamt, kann die Umrichterschaltung klein gehalten werden und beansprucht somit sehr wenig Platz. Für viele Anwendungen, beispielsweise für Traktionsanwendungen, ist die Umrichterschaltung damit prädestiniert. Desweiteren kommt die Umrichterschaltung durch die Schaltzelle und Phasenschaltzelle mit einer geringeren Anzahl an Bauelementen im Vergleich zu gängigen Umrichterschaltungen zur Erreichung der Schaltspannungsniveaus aus. Darüberhinaus ist die Umrichterschaltung durch die Schaltzelle und Phasenschaltzelle sehr spannungsfest und damit unempfindlich gegen hohe Spannungen und Fehlerzustände und weist insgesamt geringe Wirkleistungsverluste auf.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Schaltzelle,
- Fig. 2: eine zweite Ausführungsform der erfindungsgemässen Schaltzelle,
- Fig. 3: eine erste Ausführungsform einer efindungsgemässen Umrichterschaltung,
- Fig. 4: eine zweite Ausführungsform der erfindungsgemässen Umrichterschaltung und
- Fig. 5: eine dritte Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

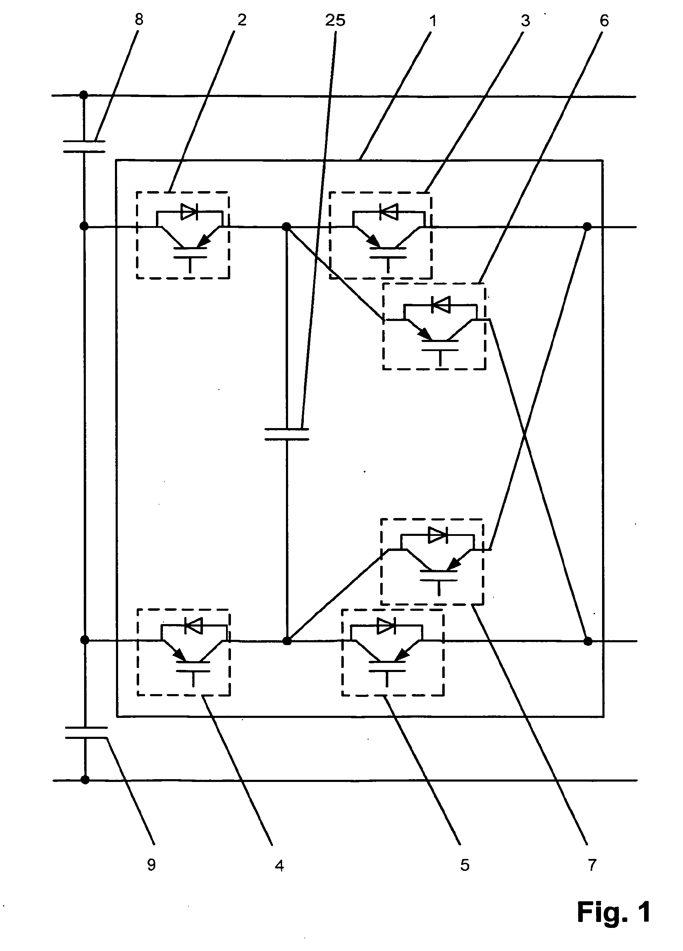

In Fig. 1 ist eine erste Ausführungsform einer erfindungsgemässen Schaltzelle dargestellt. Darin weist die Schaltzelle eine Schaltgruppe 1, wobei die Schaltgruppe 1 einen ersten und einen zweiten ansteuerbaren bidirektionalen Leistungshalbleiterschalter 2, 3 und einen Kondensator 25 auf. Erfindungsgemäss weist die Schaltgruppe 1 ferner einen dritten, vierten, fünften und sechsten ansteuerbaren bidirektionalen Leistungshalbleiterschalter 4, 5, 6, 7 auf, wobei der erste ansteuerbare bidirektionale Leistungshalbleiterschalter 2 antiseriell zu dem zweiten ansteuerbaren bidirektionalen Leistungshalbleiterschalter 3 geschaltet ist und der dritte ansteuerbare bidirektionale Leistungshalbleiterschalter 4 antiseriell zu dem vierten ansteuerbaren bidirektionalen Leistungshalbleiterschalter 5 geschaltet ist. Der Kondensator 25 der Schaltgruppe ist weiterhin mit dem Verbindungspunkt des ersten ansteuerbaren bidirektionalen Leistungshalbleiterschalters 2 mit dem zweiten ansteuerbaren bidirektionalen Leistungshalbleiterschalter 3 und mit dem Verbindungspunkt des dritten ansteuerbaren bidirektionalen Leistungshalbleiterschalters 4 mit dem vierten ansteuerbaren bidirektionalen Leistungshalbleiterschalter 5 verbunden. Der fünfte ansteuerbare bidirektionale Leistungshalbleiterschalter 6 ist zudem mit dem Verbindungspunkt des ersten ansteuerbaren bidirektionalen Leistungshalbleiterschalters 2 mit dem zweiten ansteuerbaren bidirektionalen Leistungshalbleiterschalter 3 und mit dem vierten ansteuerbaren bidirektionalen Leistungshalbleiterschalter 5 verbunden, wobei der sechste ansteuerbare bidirektionale Leistungshalbleiterschalter 7 mit dem Verbindungspunkt des dritten ansteuerbaren bidirektionalen Leistungshalbleiterschalters 4 mit dem vierten ansteuerbaren bidirektionalen Leistungshalbleiterschalter 5 und mit dem zweiten ansteuerbaren bidirektionalen Leistungshalbleiterschalter 3 verbunden ist. Darüber hinaus sind ein erster und ein zu dem ersten in Serie geschalteter zweiter kapazitiver Energiespeicher 8, 9 vorgesehen, wobei der erste ansteuerbare bidirektionale Leistungshalbleiterschalter 2 und der dritte ansteuerbare bidirektionale Leistungshalbleiterschalter 4 am Verbindungspunkt des ersten kapazitiven Energiespeichers 8 mit dem zweiten kapazitiven Energiespeicher 9 miteinander verbunden sind. Mittels der ansteuerbaren bidirektionalen Leistungshalbleiterschalter 2, 3, 4, 5, 6, 7, des Kondensators 25, der beiden kapazitiven Energiespeicher 8, 9 und deren vorstehend beschriebenen Verbindungen zueinander und untereinander, kann die gespeicherte elektrische Energie der Schaltzelle vorteilhaft gering gehalten werden, wobei die Spannungsfestigkeit bzw. die Blockierspannung der einzelnen ansteuerbaren bidirektionalen Leistungshalbleiterschalter 2, 3, 4, 5, 6, 7 nur der Spannung des Kondensators 25, die maximal am Kondensator 25 anliegt, entsprechen muss und die einzelnen ansteuerbaren bidirektionalen Leistungshalbleiterschalter 2, 3, 4, 5, 6, 7 bezüglich ihre Blockierspannung demnach lediglich auf diese Spannung ausgelegt sein müssen. Aufgrund der geringen gespeicherten elektrischen Energie der Schaltzelle insgesamt, kann diese klein gehalten werden, da der Kondensator 25 der Schaltzelle nur für diese kleine zu speichernde elektrische Energie, d.h. bezüglich ihrer Spannungsfestigkeit und/oder ihrer Kapazität, ausgelegt werden muss. Aufgrund der daraus resultierenden geringen Baugrösse des Kondensators 25 benötigt die Schaltzelle sehr wenig Platz. Ferner kann durch die geringe Baugrösse auch der Montage- und Wartungsaufwand gering gehalten werden.

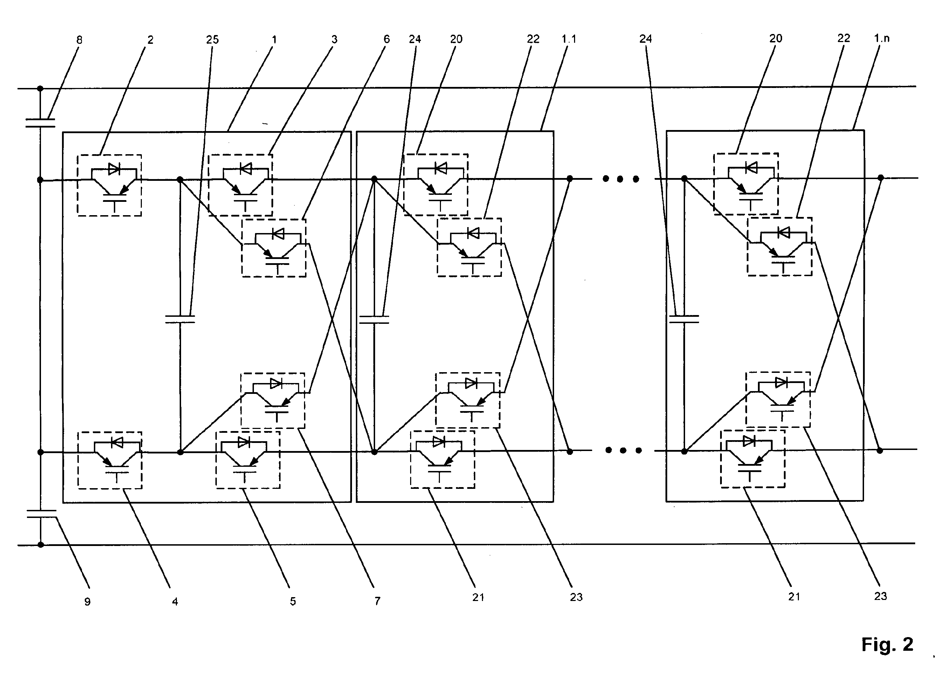

In Fig. 2 ist eine zweite Ausführungsform der erfindungsgemässen Schaltzelle gezeigt, bei der n weitere Schaltgruppen 1.1, ... 1.n vorgesehen sind, welche jeweils einen ersten, zweiten, dritten und vierten ansteuerbaren bidirektionalen Leistungshalbleiterschalter 20, 21, 22, 23 und einen Kondensator 24 auf., wobei n ≥ 1 ist. Bei jeder der n weitere Schaltgruppen 1.1, ... 1.n ist der Kondensator 24 mit dem ersten ansteuerbaren bidirektionalen Leistungshalbleiterschalter 20 und mit dem zweiten ansteuerbaren bidirektionalen Leistungshalbleiterschalter 21 verbunden, wobei der dritte ansteuerbare bidirektionale Leistungshalbleiterschalter 22 mit dem Verbindungspunkt des Kondensators 24 mit dem ersten ansteuerbaren bidirektionalen Leistungshalbleiterschalter 20 und mit dem zweiten ansteuerbaren bidirektionalen Leistungshalbleiterschalter 21 verbunden ist. Ferner ist der vierte ansteuerbare bidirektionale Leistungshalbleiterschalter 23 mit dem Verbindungspunkt des Kondensators 24 mit dem zweiten ansteuerbaren bidirektionalen Leistungshalbleiterschalter 21 und mit dem ersten ansteuerbaren bidirektionalen Leistungshalbleiterschalter 20 verbunden. Da es sich gemäss Fig. 2 bei jeder der n weiteren Schaltgruppen 1.1, ...1.n um einen Vierpol handelt, ist jede der n weiteren Schaltgruppen 1.1, ...1.n verkettet mit der jeweils benachbarten weiteren Schaltgruppe 1.1, ...1.n verbunden, wobei die Schaltgruppe 1 mit der ersten weiteren Schaltgruppe 1.1 verbunden ist. Zur Verbindung der Schaltgruppe 1 mit der ersten weiteren Schaltgruppe 1.1 ist der Verbindungspunkt des sechsten ansteuerbaren bidirektionalen Leistungshalbleiterschalters 7 mit dem zweiten ansteuerbaren bidirektionalen Leistungshalbleiterschalter 3 der Schaltgruppe 1 mit dem Verbindungspunkt des Kondensators 24 mit dem ersten ansteuerbaren bidirektionalen Leistungshalbleiterschalter 20 der ersten weiteren Schaltgruppe 1.1 verbunden ist. Weiterhin ist der Verbindungspunkt des fünften ansteuerbaren bidirektionalen Leistungshalbleiterschalters 6 mit dem vierten ansteuerbaren bidirektionalen Leistungshalbleiterschalter 5 der Schaltgruppe 1 mit dem Verbindungspunkt des Kondensators 24 mit dem zweiten ansteuerbaren bidirektionalen Leistungshalbleiterschalter 21 der ersten weiteren Schaltgruppe 1.1 verbunden. Mittels der weiteren n weiteren Schaltgruppen 1.1, ...1.n lassen sich neben den bereits erwähnten Vorteilen der erfindungsgemässen Schaltzelle je nach Wahl der Anzahl n weiterer Schaltgruppen 1.1, ...1.n zusätzliche, d.h. eine Vielzahl, Schaltspannungsniveaus ohne grossen Schaltungsaufwand und mit geringer Bauteileanzahl erreichen.

Der erste, zweite, dritte, vierte, fünfte und sechste ansteuerbare bidirektionale Leistungshalbleiterschalter 2, 3, 4, 5, 6, 7 der Schaltgruppe 1 weist vorzugsweise jeweils mindestens zwei ansteuerbare bidirektionale Schaltelemente auf, wobei die ansteuerbaren bidirektionalen Schaltelemente in Serie geschaltet sind. Vorteilhaft lässt sich damit die zu schaltende Spannung an dem jeweiligen ansteuerbaren bidirektionalen Leistungshalbleiterschalter 2, 3, 4, 5, 6, 7 erhöhen. Darüber hinaus kann auch der erste, zweite, dritte und vierte ansteuerbare bidirektionale Leistungshalbleiterschalter 20, 21, 22, 23 einer jeden n weiteren Schaltgruppe 1.1, ... 1.n jeweils mindestens zwei ansteuerbare bidirektionale Schaltelemente aufweisen, wobei dann die ansteuerbaren bidirektionalen Schaltelemente in Serie geschaltet sind. Auch dann lässt sich die zu schaltende Spannung an dem jeweiligen ansteuerbaren bidirektionalen Leistungshalbleiterschalter 20, 21, 22, 23 mit Vorteil erhöhen. Demnach ist eine beliebige Anzahl an ansteuerbaren bidirektionalen Schaltelementen für jeden ansteuerbaren bidirektionalen Leistungshalbleiterschalter 2, 3, 4, 5, 6, 7, 20, 21, 22, 23 der Schaltzelle 1 bezüglich der Ausführungsformen nach Fig. 1 und Fig. 2 denkbar.

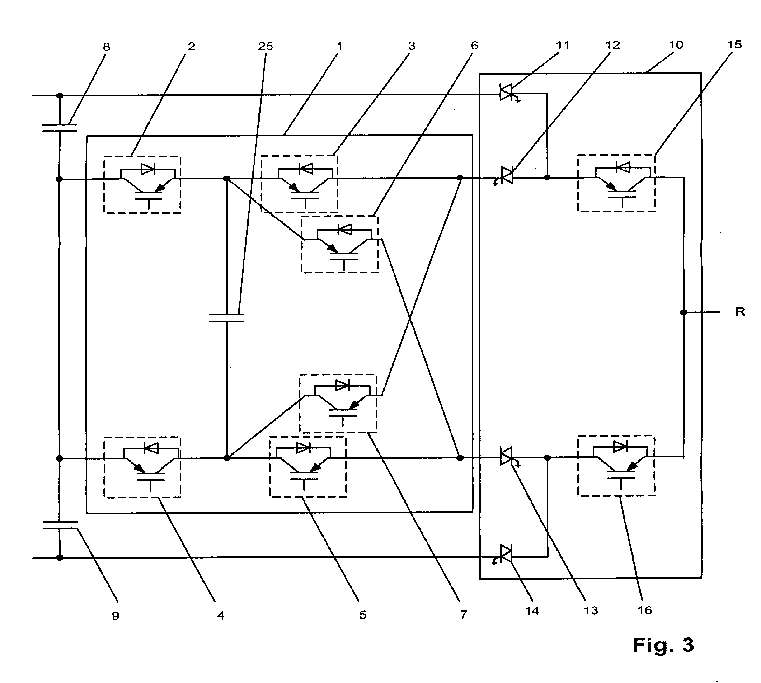

In Fig. 3 ist eine erste Ausführungsform einer erfindungsgemässen Umrichterschaltung dargestellt, die eine erfindungsgemässe Schaltzelle 1 gemäss Fig. 1 aufweist. Weiterhin ist bei der Umrichterschaltung nach Fig. 3 eine Phasenschaltzelle 10 vorgesehen, wobei die Phasenschaltzelle 10 einen ersten, zweiten, dritten, vierten, fünften und sechsten ansteuerbaren bidirektionalen Leistungshalbleiterschalter 11, 12, 13, 14, 15, 16 aufweist und der erste ansteuerbare bidirektionale Leistungshalbleiterschalter 11 der Phasenschaltzelle 10 seriell zu dem zweiten ansteuerbaren bidirektionalen Leistungshalbleiterschalter 12 der Phasenschaltzelle 10 geschaltet ist, der dritte ansteuerbare bidirektionale Leistungshalbleiterschalter 13 der Phasenschaltzelle 10 seriell zu dem vierten ansteuerbaren bidirektionalen Leistungshalbleiterschalter 14 der Phasenschaltzelle 10 geschaltet ist und der fünfte ansteuerbare bidirektionale Leistungshalbleiterschalter 15 der Phasenschaltzelle 10 mit dem Verbindungspunkt des ersten ansteuerbaren bidirektionalen Leistungshalbleiterschalter 11 mit dem zweiten ansteuerbaren bidirektionalen Leistungshalbleiterschalter 12 der Phasenschaltzelle 10 verbunden ist. Der sechste ansteuerbare bidirektionale Leistungshalbleiterschalter 16 der Phasenschaltzelle 10 ist ferner mit dem Verbindungspunkt des dritten ansteuerbaren bidirektionalen Leistungshalbleiterschalter 13 mit dem vierten ansteuerbaren bidirektionalen Leistungshalbleiterschalter 14 der Phasenschaltzelle 10 verbunden. Weiterhin ist der erste ansteuerbare bidirektionale Leistungshalbleiterschalter 11 der Phasenschaltzelle 10 gemäss Fig. 3 mit dem ersten kapazitiven Energiespeicher 8 der Schaltzelle 1 verbunden, wobei der zweite ansteuerbare bidirektionale Leistungshalbleiterschalter 12 der Phasenschaltzelle 10 mit dem Verbindungspunkt des sechsten ansteuerbaren bidirektionalen Leistungshalbleiterschalters 7 mit dem zweiten ansteuerbaren bidirektionalen Leistungshalbleiterschalter 3 der Schaltzelle 1 verbunden ist. Desweiteren ist der vierte ansteuerbare bidirektionale Leistungshalbleiterschalter 14 der Phasenschaltzelle 10 mit dem zweiten kapazitiven Energiespeicher 9 der Schaltzelle 1 verbunden, wobei der dritte ansteuerbare bidirektionale Leistungshalbleiterschalter 13 der Phasenschaltzelle 10 mit dem Verbindungspunkt des fünften ansteuerbaren bidirektionalen Leistungshalbleiterschalters 6 mit dem vierten ansteuerbaren bidirektionalen Leistungshalbleiterschalter 5 der Schaltzelle 1 verbunden ist. Mittels der vorstehend beschriebenen Umrichterschaltung nach Fig. 3 sind vorteilhaft bis zu fünf Schaltspannungsniveaus mit einer sehr geringen Bauelementanzahl möglich.

In einer nicht dargestellten alternativen Variante der vorstehend beschriebenen ersten Ausführungsform der erfindungsgemässen Umrichterschaltung nach Fig. 3, ist eine erfindungsgemässe Schaltzelle 1 gemäss Fig. 2 vorgesehen. Weiterhin ist dabei eine Phasenschaltzelle 10 vorgesehen, wobei die Phasenschaltzelle 10 einen ersten, zweiten, dritten, vierten, fünften und sechsten ansteuerbaren bidirektionalen Leistungshalbleiterschalter 11, 12, 13, 14, 15, 16 aufweist und der erste ansteuerbare bidirektionale Leistungshalbleiterschalter 11 der Phasenschaltzelle 10 seriell zu dem zweiten ansteuerbaren bidirektionalen Leistungshalbleiterschalter 12 der Phasenschaltzelle 10 geschaltet ist, der dritte ansteuerbare bidirektionale Leistungshalbleiterschalter 13 der Phasenschaltzelle 10 seriell zu dem vierten ansteuerbaren bidirektionalen Leistungshalbleiterschalter 14 der Phasenschaltzelle 10 geschaltet ist und der fünfte ansteuerbare bidirektionale Leistungshalbleiterschalter 15 der Phasenschaltzelle 10 mit dem Verbindungspunkt des ersten mit dem zweiten ansteuerbaren bidirektionalen Leistungshalbleiterschalter 11, 12 der Phasenschaltzelle 10 verbunden ist. Der sechste ansteuerbare bidirektionale Leistungshalbleiterschalter 16 der Phasenschaltzelle 10 ist zudem mit dem Verbindungspunkt des dritten mit dem vierten ansteuerbaren bidirektionalen Leistungshalbleiterschalter 13, 14 der Phasenschaltzelle 10 verbunden, wobei der erste ansteuerbare bidirektionale Leistungshalbleiterschalter 11 der Phasenschaltzelle 10 mit dem ersten kapazitiven Energiespeicher 8 der Schaltzelle 1 verbunden ist und der zweite ansteuerbare bidirektionale Leistungshalbleiterschalter 12 der Phasenschaltzelle 10 mit dem Verbindungspunkt des vierten ansteuerbaren bidirektionalen Leistungshalbleiterschalter 23 mit dem ersten ansteuerbaren bidirektionalen Leistungshalbleiterschalter 20 der n-ten weiteren Schaltzelle 1.n verbunden ist. Darüber hinaus ist der vierte ansteuerbare bidirektionale Leistungshalbleiterschalter 14 der Phasenschaltzelle 10 mit dem zweiten kapazitiven Energiespeichers 9 der Schaltzelle 1 verbunden, wobei der dritte ansteuerbare bidirektionale Leistungshalbleiterschalter 13 der Phasenschaltzelle 10 mit dem Verbindungspunkt des dritten ansteuerbaren bidirektionalen Leistungshalbleiterschalter 22 mit dem zweiten ansteuerbaren bidirektionalen Leistungshalbleiterschalter 21 der n-ten weiteren Schaltzelle 1.n verbunden ist. Mittels der vorstehend beschriebenen Umrichterschaltung sind demnach eine Vielzahl an Schaltspannungsniveaus möglich, welche insbesondere von der Anzahl n weiterer Schaltgruppen 1.1, ...1.n abhängig ist.

Mittels der ansteuerbaren bidirektionalen Leistungshalbleiterschalter 11, 12, 13, 14, 15, 16 der Phasenschaltzelle 10 und der ansteuerbaren bidirektionalen Leistungshalbleiterschalter 2, 3, 4, 5, 6, 7, 20, 21, 22, 23 der erfindungsgemässen Schaltzelle 1 kann die gespeicherte elektrische Energie der damit realisierten Umrichterschaltung vorteilhaft gering gehalten werden. Aufgrund der geringen gespeicherten elektrischen Energie der Umrichterschaltung insgesamt, kann die Umrichterschaltung klein gehalten werden und beansprucht somit sehr wenig Platz. Für viele Anwendungen, beispielsweise für Traktiönsanwendungen, ist die Umrichterschaltung damit prädestiniert. Desweiteren kommt die Umrichterschaltung durch die Schaltzelle 1 und Phasenschaltzelle 10 mit einer geringeren Anzahl an Bauelementen im Vergleich zu gängigen Umrichterschaltungen zur Erreichung der Schaltspannungsniveaus aus. Darüberhinaus ist die Umrichterschaltung durch die Schaltzelle 1 und Phasenschaltzelle 10 sehr spannungsfest und damit unempfindlich gegen hohe Spannungen und Fehlerzustände und weist insgesamt geringe Wirkleistungsverluste auf.

Vorzugsweise sind der fünfte und sechste ansteuerbare bidirektionale Leistungshalbleiterschalter 15, 16 der Phasenschaltzelle 10 miteinander verbunden und bilden demnach einen Phasenanschluss, insbesondere für die Phase R wie in Fig. 3 beispielhaft gezeigt.

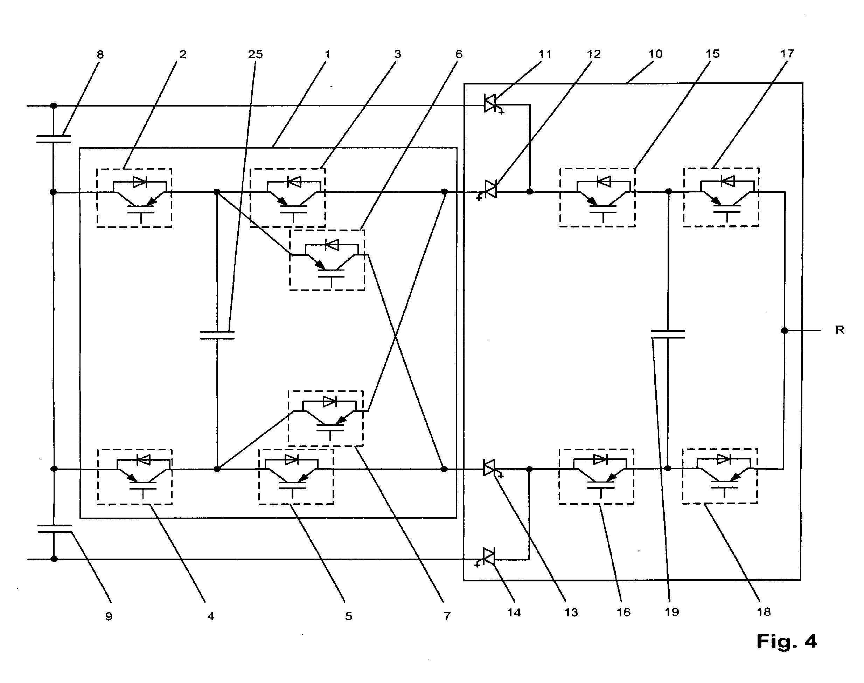

In Weiterentwicklung der Umrichterschaltung nach Fig. 3, aber auch in Verbindung mit der vorstehend beschriebenen nicht dargestellten alternativen Variante der Umrichterschaltung, ist in Fig. 4 eine zweite Ausführungsform der erfindungsgemässen Umrichterschaltung dargestellt. Darin weist die Phasenschaltzelle 10 einen siebten und einen achten ansteuerbaren bidirektionalen Leistungshalbleiterschalter 17, 18 und einen Kondensator 19 auf, wobei der Kondensator 19 der Phasenschaltzelle 10 mit dem fünften und sechsten ansteuerbaren bidirektionalen Leistungshalbleiterschalter 15, 16 der Phasenschaltzelle 10 verbunden ist. Desweiteren ist der siebte ansteuerbare bidirektionale Leistungshalbleiterschalter 17 der Phasenschaltzelle 10 gemäss Fig. 4 mit dem Verbindungspunkt des Kondensators 19 der Phasenschaltzelle 10 mit dem fünften ansteuerbaren bidirektionalen Leistungshalbleiterschalter 15 der Phasenschaltzelle 10 verbunden und der achte ansteuerbare bidirektionale Leistungshalbleiterschalter 18 der Phasenschaltzelle 10 ist mit dem Verbindungspunkt des Kondensators 19 der Phasenschaltzelle 10 mit dem sechsten ansteuerbaren bidirektionalen Leistungshalbleiterschalter 16 der Phasenschaltzelle 10 verbunden, wobei der siebte und achte ansteuerbare bidirektionale Leistungshalbleiterschalter 17, 18 der Phasenschaltzelle 10 miteinander verbunden sind. Mittels der vorstehend beschriebenen Umrichterschaltung nach Fig. 4 sind vorteilhaft bis zu elf Schaltspannungsniveaus mit einer sehr geringen Bauelementanzahl möglich.

Der jeweilige ansteuerbare bidirektionale Leistungshalbleiterschalter 2, 3, 4, 5, 6, 7, 20, 21, 22, 23 der Schaltzelle 1 nach Fig. 1 und Fig. 2 und der jeweilige ansteuerbare bidirektionale Leistungshalbleiterschalter 15, 16, 17, 18 der Phasenschaltzelle 10 gemäss Fig. 3, Fig. 4 und Fig. 5 ist vorzugsweise durch einen Bipolartransistor mit isoliert angeordneter Ansteuerelektrode (IGBT - Insulated Gate Bipolartransistor) und durch eine dazu antiparallel geschaltete Diode gebildet. Darüber hinaus ist der jeweilige ansteuerbare bidirektionale Leistungshalbleiterschalter 11, 12, 13, 14 der Phasenschaltzelle 10 gemäss Fig. 3, Fig. 4 und Fig. 5 vorzugsweise durch einen integrierten Thyristor mit kommutierter Ansteuerelektrode (IGCT) und durch eine dazu antiparallel geschaltete Diode gebildet, insbesondere um eine erhöhte Spannung schalten zu können. Alternativ ist es aber auch denkbar, dass der jeweilige ansteuerbare bidirektionale Leistungshalbleiterschalter 11, 12, 13, 14 der Phasenschaltzelle 10 ebenfalls durch einen Bipolartransistor mit isoliert angeordneter Ansteuerelektrode (IGBT - Insulated Gate Bipolartransistor) und durch eine dazu antiparallel geschaltete Diode gebildet ist. Allgemein weist der erste, zweite, dritte und vierte ansteuerbare bidirektionale Leistungshalbleiterschalter 11, 12, 13, 14 der Phasenschaltzelle 10 vorzugsweise jeweils mindestens zwei ansteuerbare bidirektionale Schaltelemente auf, wobei die ansteuerbaren bidirektionalen Schaltelemente in Serie geschaltet sind. Vorteilhaft lässt sich damit die zu schaltende Spannung an dem jeweiligen ansteuerbaren bidirektionalen Leistungshalbleiterschalter 11, 12, 13, 14 der Phasenschaltzelle 10 erhöhen. Wie bereits vorstehend erwähnt, kann das jeweilige Schaltelement durch einen Bipolartransistor mit isoliert angeordneter Ansteuerelektrode (IGBT - Insulated Gate Bipolartransistor) und durch eine dazu antiparallel geschaltete Diode oder durch einen integrierten Thyristor mit kommutierter Ansteuerelektrode (IGCT) und durch eine dazu antiparallel geschaltete Diode gebildet sein.

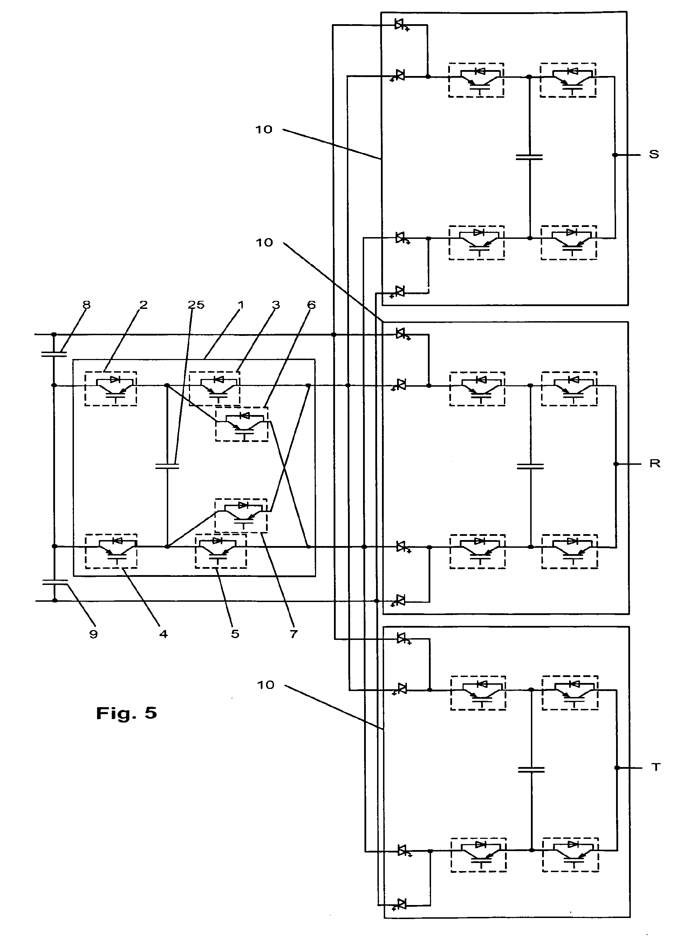

In Weiterentwicklung der Umrichterschaltung nach Fig. 4 ist in Fig. 5 eine dritte Ausführungsform der erfindungsgemässen Umrichterschaltung gezeigt. Die Umrichterschaltung nach Fig. 5 ist mit Vorteil zum Anschluss an mehrere Phasen R, S, T geeignet, wobei die Umrichterschaltung nach Fig. 5 nur beispielhaft nur für den Anschluss an drei Phasen R, S, T gezeigt ist, allgemein aber beliebig viele Phasen angeschlossen werden können. Allgemein ist dazu für jede Phase R, S, T eine Phasenschaltzelle 10 vorgesehen, wie in Fig. 5 beispielhaft dargestellt. Desweiteren ist der erste ansteuerbare bidirektionale Leistungshalbleiterschalter 11 1 einer jeden Phasenschaltzelle 10 mit dem ersten kapazitiven Energiespeicher 8 der Schaltzelle 1 verbunden, wobei der zweite ansteuerbare bidirektionale Leistungshalbleiterschalter 12 einer jeden Phasenschaltzelle 10 mit dem Verbindungspunkt des sechsten ansteuerbaren bidirektionalen Leistungshalbleiterschalters 7 mit dem zweiten ansteuerbaren bidirektionalen Leistungshalbleiterschalter 3 der Schaltzelle 1 verbunden ist. Der vierte ansteuerbare bidirektionale Leistungshalbleiterschalter 14 einer jeden Phasenschaltzelle 10 ist zudem mit dem zweiten kapazitiven Energiespeicher 9 der Schaltzelle 1 verbunden ist, wobei der dritte ansteuerbare bidirektionale Leistungshalbleiterschalter 13 einer jeden Phasenschaltzelle 10 mit dem Verbindungspunkt des fünften ansteuerbaren bidirektionalen Leistungshalbleiterschalters 6 mit dem vierten ansteuerbaren bidirektionalen Leistungshalbleiterschalter 5 der Schaltzelle 1 verbunden ist.

In Weiterentwicklung der vorstehend im Detail beschriebenen nicht dargestellten Umrichterschaltung ist es denkbar, dass zum Anschluss an mehrere, d.h. allgemein an beliebig viele Phasen R, S, T zunächst wieder für jede Phase R, S, T eine Phasenschaltzelle 10 vorgesehen ist. Im Unterschied zur Ausführungsform der Umrichterschaltung nach Fig. 5 ist dann der erste ansteuerbare bidirektionale Leistungshalbleiterschalter 11 einer jeden Phasenschaltzelle 10 mit dem ersten kapazitiven Energiespeicher 8 der Schaltzelle 1 verbunden ist, wobei der zweite ansteuerbare bidirektionale Leistungshalbleiterschalter 12 einer jeden Phasenschaltzelle 10 mit dem Verbindungspunkt des vierten ansteuerbaren bidirektionalen Leistungshalbleiterschalter 23 mit dem ersten ansteuerbaren bidirektionalen Leistungshalbleiterschalter 20 der n-ten weiteren Schaltzelle 1.n verbunden ist. Weiterhin ist der vierte ansteuerbare bidirektionale Leistungshalbleiterschalter 14 einer jeden Phasenschaltzelle 10 mit dem zweiten kapazitiven Energiespeichers 9 der Schaltzelle 1 verbunden, wobei der dritte ansteuerbare bidirektionale Leistungshalbleiterschalter 13 einer jeden Phasenschaltzelle 10 mit dem Verbindungspunkt des dritten ansteuerbaren bidirektionalen Leistungshalbleiterschalter 22 mit dem zweiten ansteuerbaren bidirektionalen Leistungshalbleiterschalter 21 der n-ten weiteren Schaltzelle 1.n verbunden ist.

### Bezugszeichenliste

- 1: Schaltgruppe
- 1.1,... 1.n: n weitere Schaltgruppen
- 2: erster ansteuerbarer bidirektionaler Leistungshalbleiterschalter der Schalt- gruppe
- 3: zweiter ansteuerbarer bidirektionaler Leistungshalbleiterschalter der Schalt- gruppe
- 4: dritter ansteuerbarer bidirektionaler Leistungshalbleiterschalter der Schalt- gruppe
- 5: vierter ansteuerbarer bidirektionaler Leistungshalbleiterschalter der Schalt- gruppe
- 6: fünfter ansteuerbarer bidirektionaler Leistungshalbleiterschalter der Schalt- gruppe
- 7: sechster ansteuerbarer bidirektionaler Leistungshalbleiterschalter der Schalt- gruppe
- 8: erster kapazitiver Energiespeicher
- 9: zweiter kapazitiver Energiespeicher
- 10: Phasenschaltzelle
- 11: erster ansteuerbarer bidirektionaler Leistungshalbleiterschalter der Phasen- schaltzelle
- 12: zweiter ansteuerbarer bidirektionaler Leistungshalbleiterschalter der Phasen- schaltzelle
- 13: dritter ansteuerbarer bidirektionaler Leistungshalbleiterschalter der Phasen- schaltzelle
- 14: vierter ansteuerbarer bidirektionaler Leistungshalbleiterschalter der Phasen- schaltzelle
- 15: fünfter ansteuerbarer bidirektionaler Leistungshalbleiterschalter der Phasen- schaltzelle
- 16: sechster ansteuerbarer bidirektionaler Leistungshalbleiterschalter der Phasen- schaltzelle
- 17: siebter ansteuerbarer bidirektionaler Leistungshalbleiterschalter der Phasen- schaltzelle
- 18: achter ansteuerbarer bidirektionaler Leistungshalbleiterschalter der Phasen- schaltzelle
- 19: Kondensator der Phasenschaltzelle
- 20: erster ansteuerbarer bidirektionaler Leistungshalbleiterschalter der n weiteren Schaltgruppen
- 21: zweiter ansteuerbarer bidirektionaler Leistungshalbleiterschalter der n weiteren Schaltgruppen
- 22: dritter ansteuerbarer bidirektionaler Leistungshalbleiterschalter der n weiteren Schaltgruppen
- 23: vierter ansteuerbarer bidirektionaler Leistungshalbleiterschalter der n weiteren Schaltgruppen
- 24: Kondensator der n weiteren Schaltgruppen
- 25: Kondensator der Schaltgruppe

## Patentansprüche

1. Schaltzelle für eine Umrichterschaltung zur Schaltung einer Vielzahl von Spannungsniveaus mit einer Schaltgruppe (1), wobei die Schaltgruppe (1) einen ersten und einen zweiten ansteuerbaren bidirektionalen Leistungshalbleiterschalter (2, 3) und einen Kondensator (25) aufweist,
**dadurch gekennzeichnet,**
**dass** die Schaltgruppe (1) einen dritten, vierten, fünften und sechsten ansteuerbaren bidirektionalen Leistungshalbleiterschalter (4, 5, 6, 7) aufweist und der erste ansteuerbare bidirektionale Leistungshalbleiterschalter (2) antiseriell zu dem zweiten ansteuerbaren bidirektionalen Leistungshalbleiterschalter (3) geschaltet ist, der dritte ansteuerbare bidirektionale Leistungshalbleiterschalter (4) antiseriell zu dem vierten ansteuerbaren bidirektionalen Leistungshalbleiterschalter (5) geschaltet ist, der Kondensator (25) mit dem Verbindungspunkt des ersten ansteuerbaren bidirektionalen Leistungshalbleiterschalters (2) mit dem zweiten ansteuerbaren bidirektionalen Leistungshalbleiterschalter (3) und mit dem Verbindungspunkt des dritten ansteuerbaren bidirektionalen Leistungshalbleiterschalters (4) mit dem vierten ansteuerbaren bidirektionalen Leistungshalbleiterschalter (5) verbunden ist, der fünfte ansteuerbare bidirektionale Leistungshalbleiterschalter (6) mit dem Verbindungspunkt des ersten ansteuerbaren bidirektionalen Leistungshalbleiterschalters (2) mit dem zweiten ansteuerbaren bidirektionalen Leistungshalbleiterschalter (3) und mit dem vierten ansteuerbaren bidirektionalen Leistungshalbleiterschalter (5) verbunden ist und der sechste ansteuerbare bidirektionale Leistungshalbleiterschalter (7) mit dem Verbindungspunkt des dritten ansteuerbaren bidirektionalen Leistungshalbleüerschalters (4) mit dem vierten ansteuerbaren bidirektionalen Leistungshalbleiterschalter (5) und mit dem zweiten ansteuerbaren bidirektionalen Leistungshalbleiterschalter (3) verbunden ist,
**dass** ein erster und ein zu dem ersten in Serie geschalteter zweiter kapazitiver Energiespeicher (8, 9) vorgesehen sind, und
**dass** der erste ansteuerbare bidirektionale Leistungshalbleiterschalter (2) und der dritte ansteuerbare bidirektionale Leistungshalbleiterschalter (4) am Verbindungspunkt des ersten kapazitiven Energiespeichers (8) mit dem zweiten kapazitiven Energiespeicher (9) miteinander verbunden sind.

2. Schaltzelle nach Anspruch 1, **dadurch gekennzeichnet, dass** n weitere Schaltgruppen (1.1, ... 1.n) vorgesehen sind, welche jeweils einen ersten, zweiten, dritten und vierten ansteuerbaren bidirektionalen Leistungshalbleiterschalter (20, 21, 22, 23) und einen Kondensator (24) aufweist, wobei n ≥ 1 ist und bei jeder der n weitere Schaltgruppen (1.1, ... 1.n) der Kondensator (24) mit dem ersten ansteuerbaren bidirektionalen Leistungshalbleiterschalter (20) und mit dem zweiten ansteuerbaren bidirektionalen Leistungshalbleiterschalter (21) verbunden ist, der dritte ansteuerbare bidirektionale Leistungshalbleiterschalter (22) mit dem Verbindungspunkt des Kondensators (24) mit dem ersten ansteuerbaren bidirektionalen Leistungshalbleiterschalter (20) und mit dem zweiten ansteuerbaren bidirektionalen Leistungshalbleiterschalter (21) verbunden ist und der vierte ansteuerbare bidirektionale Leistungshalbleiterschalter (23) mit dem Verbindungspunkt des Kondensators (24) mit dem zweiten ansteuerbaren bidirektionalen Leistungshalbleiterschalter (21) und mit dem ersten ansteuerbaren bidirektionalen Leistungshalbleiterschalter (20) verbunden ist,
dass jede der n weiteren Schaltgruppen (1.1, ...1.n) verkettet mit der jeweils benachbarten weiteren Schaltgruppe (1.1, ...1.n) verbunden ist, und
dass die Schaltgruppe (1) mit der ersten weiteren Schaltgruppe (1.1) verbunden ist.

3. Schaltzelle nach Anspruch 2, **dadurch gekennzeichnet, dass** der Verbindungspunkt des sechsten ansteuerbaren bidirektionalen Leistungshalbleiterschalters (7) mit dem zweiten ansteuerbaren bidirektionalen Leistungshalbleiterschalter (3) der Schaltgruppe (1) mit dem Verbindungspunkt des Kondensators (24) mit dem ersten ansteuerbaren bidirektionalen Leistungshalbleiterschalter (20) der ersten weiteren Schaltgruppe (1.1) verbunden ist, und
dass der Verbindungspunkt des fünften ansteuerbaren bidirektionalen Leistungshalbleiterschalters (6) mit dem vierten ansteuerbaren bidirektionalen Leistungshalbleiterschalter (5) der Schaltgruppe (1) mit dem Verbindungspunkt des Kondensators (24) mit dem zweiten ansteuerbaren bidirektionalen Leistungshalbleiterschalter (21) der ersten weiteren Schaltgruppe (1.1) verbunden ist.

4. Schaltzelle nach einem der Ansprüche 1 bis 3, **dadurch gekennzeichnet, dass** der erste, zweite, dritte, vierte, fünfte und sechste ansteuerbare bidirektionale Leistungshalbleiterschalter (2, 3, 4, 5, 6, 7) der Schaltgruppe (1) jeweils mindestens zwei ansteuerbare bidirektionale Schaltelemente aufweist, wobei die ansteuerbaren bidirektionalen Schaltelemente in Serie geschaltet sind.

5. Schaltzelle nach einem der Ansprüche 1 bis 4, **dadurch gekennzeichnet, dass** der erste, zweite, dritte und vierte ansteuerbare bidirektionale Leistungshalbleiterschalter (20, 21, 22, 23) einer jeden n weiteren Schaltgruppe (1.1, ... 1.n) jeweils mindestens zwei ansteuerbare bidirektionale Schaltelemente aufweist, wobei die ansteuerbaren bidirektionalen Schaltelemente in Serie geschaltet sind.

6. Umrichterschaltung zur Schaltung einer Vielzahl von Spannungsniveaus,
**dadurch gekennzeichnet,**
**dass** eine Schaltzelle (1) nach Anspruch 1 und eine Phasenschaltzelle (10) vorgesehen sind, wobei die Phasenschaltzelle (10) einen ersten, zweiten, dritten, vierten, fünften und sechsten ansteuerbaren bidirektionalen Leistungshalbleiterschalter (11, 12, 13, 14, 15, 16) aufweist und der erste ansteuerbare bidirektionale Leistungshalbleiterschalter (11) der Phasenschaltzelle (10) seriell zu dem zweiten ansteuerbaren bidirektionalen Leistungshalbleiterschalter (12) der Phasenschaltzelle (10) geschaltet ist, der dritte ansteuerbare bidirektionale Leistungshalbleiterschalter (13) der Phasenschaltzelle (10) seriell zu dem vierten ansteuerbaren bidirektionalen Leistungshalbleiterschalter (14) der Phasenschaltzelle (10) geschaltet ist, der fünfte ansteuerbare bidirektionale Leistungshalbleiterschalter (15) der Phasenschaltzelle (10) mit dem Verbindungspunkt des ersten ansteuerbaren bidirektionalen Leistungshalbleiterschalter (11) mit dem zweiten ansteuerbaren bidirektionalen Leistungshalbleiterschalter (12) der Phasenschaltzelle (10) verbunden ist und der sechste ansteuerbare bidirektionale Leistungshalbleiterschalter (16) der Phasenschaltzelle (10) mit dem Verbindungspunkt des dritten ansteuerbaren bidirektionalen Leistungshalbleiterschalter (13) mit dem vierten ansteuerbaren bidirektionalen Leistungshalbleiterschalter (14) der Phasenschaltzelle (10) verbunden ist,
**dass** der erste ansteuerbare bidirektionale Leistungshalbleiterschalter (11) der Phasenschaltzelle (10) mit dem ersten kapazitiven Energiespeicher (8) der Schaltzelle (1) verbunden ist,
**dass** der zweite ansteuerbare bidirektionale Leistungshalbleiterschalter (12) der Phasenschaltzelle (10) mit dem Verbindungspunkt des sechsten ansteuerbaren bidirektionalen Leistungshalbleiterschalters (7) mit dem zweiten ansteuerbaren bidirektionalen Leistungshalbleiterschalter (3) der Schaltzelle (1) verbunden ist,
**dass** der vierte ansteuerbare bidirektionale Leistungshalbleiterschalter (14) der Phasenschaltzelle (10) mit dem zweiten kapazitiven Energiespeicher (9) der Schaltzelle (1) verbunden ist, und
**dass** der dritte ansteuerbare bidirektionale Leistungshalbleiterschalter (13) der Phasenschaltzelle (10) mit dem Verbindungspunkt des fünften ansteuerbaren bidirektionalen Leistungshalbleiterschalters (6) mit dem vierten ansteuerbaren bidirektionalen Leistungshalbleiterschalter (5) der Schaltzelle (1) verbunden ist.

7. Umrichterschaltung zur Schaltung einer Vielzahl von Spannungsniveaus,
**dadurch gekennzeichnet,**
**dass** eine Schaltzelle (1) nach Anspruch 2 und eine Phasenschaltzelle (10) vorgesehen sind, wobei die Phasenschaltzelle (10) einen ersten, zweiten, dritten, vierten, fünften und H sechsten ansteuerbaren bidirektionalen Leistungshalbleiterschalter (11, 12, 13, 14, 15, 16) aufweist und der erste ansteuerbare bidirektionale Leistungshalbleiterschalter (11) der Phasenschaltzelle (10) seriell zu dem zweiten ansteuerbaren bidirektionalen Leistungshalbleiterschalter (12) der Phasenschaltzelle (10) geschaltet ist, der dritte ansteuerbare bidirektionale Leistungshalbleiterschalter (13) der Phasenschaltzelle (10) seriell zu dem vierten ansteuerbaren bidirektionalen Leistungshalbleiterschalter (14) der Phasenschaltzelle (10) geschaltet ist, der fünfte ansteuerbare bidirektionale Leistungshalbleiterschalter (15) der Phasenschaltzelle (10) mit dem Verbindungspunkt des ersten mit dem zweiten ansteuerbaren bidirektionalen Leistungshalbleiterschalter (11, 12) der Phasenschaltzelle (10) verbunden ist und der sechste ansteuerbare bidirektionale Leistungshalbleiterschalter (16) der Phasenschaltzelle (10) mit dem Verbindungspunkt des dritten mit dem vierten ansteuerbaren bidirektionalen Leistungshalbleiterschalter (13, 14) der Phasenschaltzelle (10) verbunden ist,
**dass** der erste ansteuerbare bidirektionale Leistungshalbleiterschalter (11) der Phasenschaltzelle (10) mit dem ersten kapazitiven Energiespeicher (8) der Schaltzelle (1) verbunden ist,
**dass** der zweite ansteuerbare bidirektionale Leistungshalbleiterschalter (12) der Phasenschaltzelle (10) mit dem Verbindungspunkt des vierten ansteuerbaren bidirektionalen Leistungshalbleiterschalter (23) mit dem ersten ansteuerbaren bidirektionalen Leistungshalbleiterschalter (20) der n-ten weiteren Schaltzelle (1.n) verbunden ist,
**dass** der vierte ansteuerbare bidirektionale Leistungshalbleiterschalter (14) der Phasenschaltzelle (10) mit dem zweiten kapazitiven Energiespeichers (9) der Schaltzelle (1) verbunden ist, und
**dass** der dritte ansteuerbare bidirektionale Leistungshalbleiterschalter (13) der Phasenschaltzelle (10) mit dem Verbindungspunkt des dritten ansteuerbaren bidirektionalen Leistungshalbleiterschalter (22) mit dem zweiten ansteuerbaren bidirektionalen Leistungshalbleiterschalter (21) der n-ten weiteren Schaltzelle (1.n) verbunden ist.

8. Umrichterschaltung nach Anspruch 6 oder 7, **dadurch gekennzeichnet, dass** der fünfte und sechste ansteuerbare bidirektionale Leistungshalbleiterschalter (15, 16) der Phasenschaltzelle (10) miteinander verbunden sind.

9. Umrichterschaltung nach Anspruch 6 oder 7, **dadurch gekennzeichnet, dass** die Phasenschaltzelle (10) einen siebten und einen achten ansteuerbaren bidirektionalen Leistungshalbleiterschalter (17, 18) und einen Kondensator (19) aufweist,
dass der Kondensator (19) der Phasenschaltzelle (10) mit dem fünften und sechsten ansteuerbaren bidirektionalen Leistungshalbleiterschalter (15, 16) der Phasenschaltzelle (10) verbunden ist,
dass der siebte ansteuerbare bidirektionale Leistungshalbleiterschalter (17) der Phasenschaltzelle (10) mit dem Verbindungspunkt des Kondensators (19) der Phasenschaltzelle (10) mit dem fünften ansteuerbaren bidirektionalen Leistungshalbleiterschalter (15) der Phasenschaltzelle (10) verbunden ist und der achte ansteuerbare bidirektionale Leistungshalbleiterschalter (18) der Phasenschaltzelle (10) mit dem Verbindungspunkt des Kondensators (19) der Phasenschaltzelle (10) mit dem sechsten ansteuerbaren bidirektionalen Leistungshalbleiterschalter (16) der Phasenschaltzelle (10) verbunden ist, und dass der siebte und achte ansteuerbare bidirektionale Leistungshalbleiterschalter (17, 18) der Phasenschaltzelle (10) miteinander verbunden sind.

10. Umrichterschaltung nach Anspruch 6, **dadurch gekennzeichnet, dass** für jede Phase (R, S, T) eine Phasenschaltzelle (10) vorgesehen ist,
dass der erste ansteuerbare bidirektionale Leistungshalbleiterschalter (11) einer jeden Phasenschaltzelle (10) mit dem ersten kapazitiven Energiespeicher (8) der Schaltzelle (1) verbunden ist, und dass der zweite ansteuerbare bidirektionale Leistungshalbleiterschalter (12) einer jeden Phasenschaltzelle (10) mit dem Verbindungspunkt des sechsten ansteuerbaren bidirektionalen Leistungshalbleiterschalters (7) mit dem zweiten ansteuerbaren bidirektionalen Leistungshalbleiterschalter (3) der Schaltzelle (1) verbunden ist,
dass der vierte ansteuerbare bidirektionale Leistungshalbleiterschalter (14) einer jeden Phasenschaltzelle (10) mit dem zweiten kapazitiven Energiespeicher (9) der Schaltzelle (1) verbunden ist, und
dass der dritte ansteuerbare bidirektionale Leistungshalbleiterschalter (13) einer jeden Phasenschaltzelle (10) mit dem Verbindungspunkt des fünften ansteuerbaren bidirektionalen Leistungshalbleiterschalters (6) mit dem vierten ansteuerbaren bidirektionalen Leistungshalbleiterschalter (5) der Schaltzelle (1) verbunden ist.

11. Umrichterschaltung nach Anspruch 7, **dadurch gekennzeichnet, dass** für jede Phase (R, S, T) eine Phasenschaltzelle (10) vorgesehen ist,
dass der erste ansteuerbare bidirektionale Leistungshalbleiterschalter (11) einer jeden Phasenschaltzelle (10) mit dem ersten kapazitiven Energiespeicher (8) der Schaltzelle (1) verbunden ist,
dass der zweite ansteuerbare bidirektionale Leistungshalbleiterschalter (12) einer jeden Phasenschaltzelle (10) mit dem Verbindungspunkt des vierten ansteuerbaren bidirektionalen Leistungshalbleiterschalter (23) mit dem ersten ansteuerbaren bidirektionalen Leistungshalbleiterschalter (20) der n-ten weiteren Schaltzelle (1.n) verbunden ist,
dass der vierte ansteuerbare bidirektionale Leistungshalbleiterschalter (14) einer jeden Phasenschaltzelle (10) mit dem zweiten kapazitiven Energiespeichers (9) der Schaltzelle (1) verbunden ist, und
dass der dritte ansteuerbare bidirektionale Leistungshalbleiterschalter (13) einer jeden Phasenschaltzelle (10) mit dem Verbindungspunkt des dritten ansteuerbaren bidirektionalen Leistungshalbleiterschalter (22) mit dem zweiten ansteuerbaren bidirektionalen Leistungshalbleiterschalter (21) der n-ten weiteren Schaltzelle (1.n) verbunden ist.

12. Umrichterschaltung nach einem der Ansprüche 6 bis 11, **dadurch gekennzeichnet, dass** der erste, zweite, dritte und vierte ansteuerbare bidirektionale Leistungshalbleiterschalter (11, 12, 13, 14) der Phasenschaltzelle (10) jeweils mindestens zwei ansteuerbare bidirektionale Schaltelemente aufweist, wobei die ansteuerbaren bidirektionalen Schaltelemente in Serie geschaltet sind.

## Claims

1. Switchgear cell for a converter circuit for switching a multiplicity of voltage levels having a group of connection (1), with the group of connection (1) having a first and a second controllable bidirectional power semiconductor switch (2, 3) and a capacitor (25),
**characterized**
**in that** the group of connection (1) has a third, fourth, fifth and sixth controllable bidirectional power semiconductor switch (4, 5, 6, 7) and the first controllable bidirectional power semiconductor switch (2) is connected back-to-back in series with the second controllable bidirectional power semiconductor switch (3), the third controllable bidirectional power semiconductor switch (4) is connected back-to-back in series with the fourth controllable bidirectional power switch (5), the capacitor (25) is connected to the connection point of the first controllable bidirectional power semiconductor switch (2) to the second controllable bidirectional power semiconductor switch (3) and to the connection point of the third controllable bidirectional power semiconductor switch (4) to the fourth controllable bidirectional power semiconductor switch (5), the fifth controllable bidirectional power semiconductor switch (6) is connected to the connection point of the first controllable bidirectional power semiconductor switch (2) to the second controllable bidirectional power semiconductor switch (3), and to the fourth controllable bidirectional power semiconductor switch (5), and the sixth controllable bidirectional power semiconductor switch (7) is connected to the connection point of the third controllable bidirectional power semiconductor switch (4) to the fourth controllable bidirectional power semiconductor switch (5) and to the second controllable bidirectional power semiconductor switch (3),
**in that** a first and a second, which is connected in series with the first, capacitive energy store (8, 9) are provided, and
**in that** the first controllable bidirectional power semiconductor switch (2) and the third controllable bidirectional power semiconductor switch (4) are connected to one another at the connection point of the first capacitive energy store (8) to the second capacitive energy store (9).

2. Switchgear cell according to Claim 1, **characterized in that** further groups of connection (1.1, ... 1.n) are provided and each have a first, second, third, and fourth controllable bidirectional power semiconductor switch (20, 21, 22, 23) and a capacitor (24) where n ≥ 1, and the capacitor (24) in each of the n further groups of connection (1.1, ... 1.n) is connected to the first controllable bidirectional power semiconductor switch (20) and to the second controllable bidirectional power semiconductor switch (21), the third controllable bidirectional power semiconductor switch (22) is connected to the connection point of the capacitor (24), to the first controllable bidirectional power semiconductor switch (20) and to the second controllable bidirectional power semiconductor switch (21), and the fourth controllable bidirectional power semiconductor switch (23) is connected to the connection point of the capacitor (24), to the second controllable bidirectional
power semiconductor switch (21) and to the first controllable bidirectional power semiconductor switch (20),
**in that** each of the n further groups of connection (1.1, ...1.n) is connected in a linked form to the respectively adjacent further group of connection (1.1, ...1.n), and
**in that** the group of connection (1) is connected to the first further group of connection (1.1).

3. Switchgear cell according to Claim 2, **characterized in that** the connection point of the sixth controllable bidirectional power semiconductor switch (7) to the second controllable bidirectional power semiconductor switch (3) in the group of connection (1) is connected to the connection point of the capacitor (24) to the first controllable bidirectional power semiconductor switch (20) in the first further group of connection (1.1), and
**in that** the connection point of the fifth controllable bidirectional power semiconductor switch (6) to the fourth controllable bidirectional power semiconductor switch (5) in the group of connection (1) is connected to the connection point of the capacitor (24) to the second controllable bidirectional power semiconductor switch (21) in the first further group of connection (1.1).

4. Switchgear cell according to one of Claims 1 to 3, **characterized in that** the first, second, third, fourth, fifth and sixth controllable bidirectional power semiconductor switches (2, 3, 4, 5, 6, 7) in the group of connection (1) each have at least two controllable bidirectional switching elements, with the controllable bidirectional switching elements being connected in series.

5. Switchgear cell according to one of Claims 1 to 4, **characterized in that** the first, second, third and fourth controllable bidirectional power semiconductor switches (20, 21, 22, 23) in each of the n further groups of connection (1.1, ... 1.n) each have at least two controllable bidirectional switching elements, with the controllable bidirectional switching elements being connected in series.

6. Converter circuit for switching a multiplicity of voltage levels,
**characterized**
**in that** a switchgear cell (1) according to Claim 1 and a phase switchgear cell (10) are provided, with the phase switchgear cell (10) having a first, second, third, fourth, fifth, and sixth controllable bidirectional power semiconductor switch (11, 12, 13, 14, 15, 16) and with the first controllable bidirectional power semiconductor switch (11) of the phase switchgear cell (10) being connected in series with the second controllable bidirectional power semiconductor switch (12) in the phase switchgear cell (10), with the third controllable bidirectional power semiconductor switch (13) in the phase switchgear cell (10) being connected in series with the fourth controllable bidirectional power semiconductor switch (14) in the phase switchgear cell (10), with the fifth controllable bidirectional power semiconductor switch (15) in the phase switchgear cell (10) being connected to the connection point of the first controllable bidirectional power semiconductor switch (11) to the second controllable bidirectional power semiconductor switch (12) in the phase switchgear cell (10), and with the sixth controllable bidirectional power semiconductor switch (16) in the phase switchgear cell (10) being connected to the connection point of the third controllable bidirectional power semiconductor switch (13) to the fourth controllable bidirectional power semiconductor switch (14) in the phase switchgear cell (10),
**in that** the first controllable bidirectional power semiconductor switch (11) in the phase switchgear cell (10) is connected to the first capacitive energy store (8) in the switchgear cell (1), in that the second controllable bidirectional power semiconductor switch (12) in the phase switchgear cell (10) is connected to the connection point of the sixth controllable bidirectional power semiconductor switch (7) to the second controllable bidirectional power semiconductor switch (3) in the switchgear cell (1),
**in that** the fourth controllable bidirectional power semiconductor switch (14) in the phase switchgear cell (10) is connected to the second capacitive energy store (9) in the switchgear cell (1), and
**in that** the third controllable bidirectional power semiconductor switch (13) in the phase switchgear cell (10) is connected to the connection point of the fifth controllable bidirectional power semiconductor switch (6) to the fourth controllable bidirectional power semiconductor switch (5) in the switchgear cell (1).

7. Converter circuit for switching a multiplicity of voltage levels,
**characterized**
**in that** a switchgear cell (1) according to Claim 2 and a phase switchgear cell (10) are provided, with the phase switchgear cell (10) having a first, second, third, fourth, fifth, and sixth controllable bidirectional power semiconductor switch (11, 12, 13, 14, 15, 16) and with the first controllable bidirectional power semiconductor switch (11) of the phase switchgear cell (10) being connected in series with the second controllable bidirectional power semiconductor switch (12) in the phase switchgear cell (10), with the third controllable bidirectional power semiconductor switch (13) in the phase switchgear cell (10) being connected in series with the fourth controllable bidirectional power semiconductor switch (14) in the phase switchgear cell (10), with the fifth controllable bidirectional power semiconductor switch (15) in the phase switchgear cell (10) being connected to the connection point of the first to the second controllable bidirectional power semiconductor switch (11, 12) in the phase switchgear cell (10), and with the sixth controllable bidirectional power semiconductor switch (16) in the phase switchgear cell (10) being connected to the connection point of the third to the fourth controllable bidirectional power semiconductor switch (13, 14) in the phase switchgear cell (10), in that the first controllable bidirectional power semiconductor switch (11) in the phase switchgear cell (10) is connected to the first capacitive energy store (8) in the switchgear cell (1),
**in that** the second controllable bidirectional power semiconductor switch (12) in the phase switchgear cell (10) is connected to the connection point of the fourth controllable bidirectional power semiconductor switch (23) to the first controllable bidirectional power semiconductor switch (20) in the n-th further switchgear cell (1.n),
**in that** the fourth controllable bidirectional power semiconductor switch (14) in the phase switchgear cell (10) is connected to the second capacitive energy store (9) in the switchgear cell (1), and
**in that** the third controllable bidirectional power semiconductor switch (13) in the phase switchgear cell (10) is connected to the connection point of the third controllable bidirectional power semiconductor switch (22) to the second controllable bidirectional power semiconductor switch (21) in the n-th further switchgear cell (1.n).

8. Converter circuit according to Claim 6 or 7, **characterized in that** the fifth and sixth controllable bidirectional power semiconductor switches (15, 16) in the phase switchgear cell (10) are connected to one another.

9. Converter circuit according to Claim 6 or 7, **characterized in that** the phase switchgear cell (10) has a seventh and an eighth controllable bidirectional power semiconductor switch (17, 18) and a capacitor (19),
**in that** the capacitor (19) in the phase switchgear cell (10) is connected to the fifth and sixth controllable bidirectional power semiconductor switches (15, 16) in the phase switchgear cell (10),
**in that** the seventh controllable bidirectional power semiconductor switch (17) in the phase switchgear cell (10) is connected to the connection point of the capacitor (19) in the phase switchgear cell (10) to the fifth controllable bidirectional power semiconductor switch (15) in the phase switchgear cell (10), and the eighth controllable bidirectional power semiconductor switch (18) in the phase switchgear cell (10) is connected to the connection point of the capacitor (19) in the phase switchgear cell (10) to the sixth controllable bidirectional power
semiconductor switch (16) in the phase switchgear cell (10), and
**in that** the seventh and eighth controllable bidirectional power semiconductor switches (17, 18) in the phase switchgear cell (10) are connected to one another.

10. Converter circuit according to Claim 6, **characterized in that** a phase switchgear cell (10) is provided for each phase (R, Y, B),
**in that** the first controllable bidirectional power semiconductor switch (11) in each phase switchgear cell (10) is connected to the first capacitive energy store (8) in the switchgear cell (1), and
**in that** the second controllable bidirectional power semiconductor switch (12) in each phase switchgear cell (10) is connected to the connection point of the sixth controllable bidirectional power semiconductor switch (7) to the second controllable bidirectional power semiconductor switch (3) in the switchgear cell (1),
**in that** the fourth controllable bidirectional power semiconductor switch (14) in each phase switchgear cell (10) is connected to the second capacitive energy store (9) in the switchgear cell (1), and **in that** the third controllable bidirectional power semiconductor switch (13) in each phase switchgear cell (10) is connected to the connection point of the fifth controllable bidirectional power semiconductor switch (6) to the fourth controllable bidirectional power semiconductor switch (5) in the switchgear cell (1).

11. Converter circuit according to Claim 7,
**characterized in that** a phase switchgear cell (10) is provided for each phase (R, Y, B),
**in that** the first controllable bidirectional power semiconductor switch (11) in each phase switchgear cell (10) is connected to the first capacitive energy store (8) in the switchgear cell (1),
**in that** the second controllable bidirectional power semiconductor switch (12) in each phase switchgear cell (10) is connected to the connection point of the fourth controllable bidirectional power semiconductor switch (23) to the first controllable bidirectional power semiconductor switch (20) in the n-th further switchgear cell (1.n),
**in that** the fourth controllable bidirectional power semiconductor switch (14) in each phase switchgear cell (10) is connected to the second capacitive energy store (9) in the switchgear cell (1), and
**in that** the third controllable bidirectional power semiconductor switch (13) in each phase switchgear cell (10) is connected to the connection point of the third controllable bidirectional power semiconductor switch (22) to the second controllable bidirectional power semiconductor switch (21) in the n-th further switchgear cell (1.n).

12. Converter circuit according to one of Claims 6 to 11, **characterized in that** the first, second, third and fourth controllable bidirectional power semiconductor switches (11, 12, 13, 14) in the phase switchgear cell (10) each have at least two controllable bidirectional switching elements, with the controllable bidirectional switching elements being connected in series.

## Revendications

1. Cellule de commutation pour un circuit convertisseur statique destiné à commuter une pluralité de niveaux de tension, comprenant un groupe de commutation (1), le groupe de commutation (1) présentant un premier et un deuxième commutateur semiconducteur de puissance bidirectionnel commandable (2, 3) et un condensateur (25),
**caractérisée en ce**
**que** le groupe de commutation (1) présente un troisième, un quatrième, un cinquième et un sixième commutateur semiconducteur de puissance bidirectionnel commandable (4, 5, 6, 7) et le premier commutateur semiconducteur de puissance bidirectionnel commandable (2) est branché e n tête-bêche avec le deuxième commutateur semiconducteur de puissance bidirectionnel commandable (3), le troisième commutateur semiconducteur de puissance bidirectionnel commandable (4) est branché en tête-bêche avec le quatrième commutateur semiconducteur de puissance bidirectionnel commandable (5), le condensateur (25) est relié avec le point de liaison du premier commutateur semiconducteur de puissance bidirectionnel commandable (2) avec le deuxième commutateur semiconducteur de puissance bidirectionnel commandable (3) et avec le point de liaison du troisième commutateur semiconducteur de puissance bidirectionnel commandable (4) avec le quatrième commutateur semiconducteur de puissance bidirectionnel commandable (5), le cinquième commutateur semiconducteur de puissance bidirectionnel commandable (6) est relié avec le point de liaison du premier commutateur semiconducteur de puissance bidirectionnel commandable (2) avec le deuxième commutateur semiconducteur de puissance bidirectionnel commandable (3) et avec le quatrième commutateur semiconducteur de puissance bidirectionnel commandable (5) et le sixième commutateur semiconducteur de puissance bidirectionnel commandable (7) est relié avec le point de liaison du troisième commutateur semiconducteur de puissance bidirectionnel commandable (4) et avec le quatrième commutateur semiconducteur de puissance bidirectionnel commandable (5) et avec le deuxième commutateur semiconducteur de puissance bidirectionnel commandable (3),
**qu'**il est prévu un premier accumulateur d'énergie capacitif et un deuxième (8, 9) branché en série avec le premier, et
**que** le premier commutateur semiconducteur de puissance bidirectionnel commandable (2) et le troisième commutateur semiconducteur de puissance bidirectionnel commandable (4) sont reliés entre eux au point de liaison du premier accumulateur d'énergie capacitif (8) avec le deuxième accumulateur d'énergie capacitif (9).

2. Cellule de commutation selon la revendication 1, **caractérisée en ce que** n groupes de commutation supplémentaires (1.1, ..., 1.n) sont prévus, lesquels présentent respectivement un premier, un deuxième, un troisième et un quatrième commutateur semiconducteur de puissance bidirectionnel commandable (20, 21, 22, 23) ainsi qu'un condensateur (24), avec n ≥ 1 et sur chacun des n groupes de commutation supplémentaires (1.1, ..., 1.n), le condensateur (24) étant relié avec le premier commutateur semiconducteur de puissance bidirectionnel commandable (20) et avec le deuxième commutateur semiconducteur de puissance bidirectionnel commandable (21), le troisième commutateur semiconducteur de puissance bidirectionnel commandable (22) étant relié avec le point de liaison du condensateur (24) avec le premier commutateur semiconducteur de puissance bidirectionnel commandable (20) et avec le deuxième commutateur semiconducteur de puissance bidirectionnel commandable (21) et le quatrième commutateur semiconducteur de puissance bidirectionnel commandable (23) étant relié avec le point de liaison du condensateur (24) avec le deuxième commutateur semiconducteur de puissance bidirectionnel commandable (21) et avec le premier commutateur semiconducteur de puissance bidirectionnel commandable (20),
que chacun des n groupes de commutation supplémentaires (1.1, ..., 1.n) est relié de manière enchaînée avec le groupe de commutation supplémentaire (1.1, ..., 1.n) voisin respectif et
que le groupe de commutation (1) est relié avec le premier groupe de commutation supplémentaire (1.1).

3. Cellule de commutation selon la revendication 2, **caractérisée en ce que** le point de liaison du sixième commutateur semiconducteur de puissance bidirectionnel commandable (7) avec le deuxième commutateur semiconducteur de puissance bidirectionnel commandable (3) du groupe de commutation (1) est relié avec le point de liaison du condensateur (24) avec le premier commutateur semiconducteur de puissance bidirectionnel commandable (20) du premier groupe de commutation supplémentaire (1.1), et
que le point de liaison du septième commutateur semiconducteur de puissance bidirectionnel commandable (6) avec le quatrième commutateur semiconducteur de puissance bidirectionnel commandable (5) du groupe de commutation (1) est relié avec le point de liaison du condensateur (24) avec le deuxième commutateur semiconducteur de puissance bidirectionnel commandable (21) du premier groupe de commutation supplémentaire (1.1).

4. Cellule de commutation selon l'une des revendications 1 à 3, **caractérisée en ce que** le premier, le deuxième, le troisième, le quatrième, le cinquième et le sixième commutateur semiconducteur de puissance bidirectionnel commandable (2, 3, 4, 5, 6, 7) du groupe de commutation (1) présentent respectivement au moins deux éléments de commutation bidirectionnels commandables, les éléments de commutation bidirectionnels commandables étant branchés en série.

5. Cellule de commutation selon l'une des revendications 1 à 4, **caractérisée en ce que** le premier, le deuxième, le troisième et le quatrième commutateur semiconducteur de puissance bidirectionnel commandable (20, 21, 22, 23) de l'un des n groupes de commutation supplémentaires (1.1, ..., 1.n) présentent respectivement au moins deux éléments de commutation bidirectionnels commandables, les éléments de commutation bidirectionnels commandables étant branchés en série.

6. Circuit convertisseur statique destiné à commuter une pluralité de niveaux de tension,
**caractérisé en ce**
**que** sont prévues une cellule de commutation (1) selon la revendication 1 ainsi qu'une cellule de commutation de phase (10), la cellule de commutation de phase (10) présentant un premier, un deuxième, un troisième, un quatrième, un cinquième et un sixième commutateur semiconducteur de puissance bidirectionnel commandable (11, 12, 13, 14, 15, 16) et le premier commutateur semiconducteur de puissance bidirectionnel commandable (11) de la cellule de commutation de phase (10) étant branché en série avec le deuxième commutateur semiconducteur de puissance bidirectionnel commandable (12) de la cellule de commutation de phase (10), le troisième commutateur semiconducteur de puissance bidirectionnel commandable (13) de la cellule de commutation de phase (10) étant branché en série avec le quatrième commutateur semiconducteur de puissance bidirectionnel commandable (14) de la cellule de commutation de phase (10), le cinquième commutateur semiconducteur de puissance bidirectionnel commandable (15) de la cellule de commutation de phase (10) étant relié avec le point de liaison du premier commutateur semiconducteur de puissance bidirectionnel commandable (11) avec le deuxième commutateur semiconducteur de puissance bidirectionnel commandable (12) de la cellule de commutation de phase (10) et le sixième commutateur semiconducteur de puissance bidirectionnel commandable (16) de la cellule de commutation de phase (10) étant relié avec le point de liaison du troisième commutateur semiconducteur de puissance bidirectionnel commandable (13) avec le quatrième commutateur semiconducteur de puissance bidirectionnel commandable (14) de la cellule de commutation de phase (10),
**que** le premier commutateur semiconducteur de puissance bidirectionnel commandable (11) de la cellule de commutation de phase (10) est relié avec le premier accumulateur d'énergie capacitif (8) de la cellule de commutation (1),
**que** le deuxième commutateur semiconducteur de puissance bidirectionnel commandable (12) de la cellule de commutation de phase (10) est relié avec le point de liaison du sixième commutateur semiconducteur de puissance bidirectionnel commandable (7) avec le deuxième commutateur semiconducteur de puissance bidirectionnel commandable (3) de la cellule de commutation (1),
**que** le quatrième commutateur semiconducteur de puissance bidirectionnel commandable (14) de la cellule de commutation de phase (10) est relié avec le deuxième accumulateur d'énergie capacitif (9) de la cellule de commutation (1), et
**que** le troisième commutateur semiconducteur de puissance bidirectionnel commandable (13) de la cellule de commutation de phase (10) est relié avec le point de liaison du cinquième commutateur semiconducteur de puissance bidirectionnel commandable (6) avec le quatrième commutateur semiconducteur de puissance bidirectionnel commandable (5) de la cellule de commutation (1).

7. Circuit convertisseur statique destiné à commuter une pluralité de niveaux de tension,
**caractérisé en ce**
**que** sont prévues une cellule de commutation (1) selon la revendication 2 ainsi qu'une cellule de commutation de phase (10), la cellule de commutation de phase (10) présentant un premier, un deuxième, un troisième, un quatrième, un cinquième et un sixième commutateur semiconducteur de puissance bidirectionnel commandable (11, 12, 13, 14, 15, 16) et le premier commutateur semiconducteur de puissance bidirectionnel commandable (11) de la cellule de commutation de phase (10) étant branché en série avec le deuxième commutateur semiconducteur de puissance bidirectionnel commandable (12) de la cellule de commutation de phase (10), le troisième commutateur semiconducteur de puissance bidirectionnel commandable (13) de la cellule de commutation de phase (10) étant branché en série avec le quatrième commutateur semiconducteur de puissance bidirectionnel commandable (14) de la cellule de commutation de phase (10), le cinquième commutateur semiconducteur de puissance bidirectionnel commandable (15) de la cellule de commutation de phase (10) étant relié avec le point de liaison du premier avec le deuxième commutateur semiconducteur de puissance bidirectionnel commandable (11, 12) de la cellule de commutation de phase (10) et le sixième commutateur semiconducteur de puissance bidirectionnel commandable (16) de la cellule de commutation de phase (10) étant relié avec le point de liaison du troisième avec le quatrième commutateur semiconducteur de puissance bidirectionnel commandable (13, 14) de la cellule de commutation de phase (10),
**que** le premier commutateur semiconducteur de puissance bidirectionnel commandable (11) de la cellule de commutation de phase (10) est relié avec le premier accumulateur d'énergie capacitif (8) de la cellule de commutation (1),
**que** le deuxième commutateur semiconducteur de puissance bidirectionnel commandable (12) de la cellule de commutation de phase (10) est relié avec le point de liaison du quatrième commutateur semiconducteur de puissance bidirectionnel commandable (23) avec le premier commutateur semiconducteur de puissance bidirectionnel commandable (20) de la n-ième cellule de commutation supplémentaire (1.n),
**que** le quatrième commutateur semiconducteur de puissance bidirectionnel commandable (14) de la cellule de commutation de phase (10) est relié avec le deuxième accumulateur d'énergie capacitif (9) de la cellule de commutation (1), et
**que** le troisième commutateur semiconducteur de puissance bidirectionnel commandable (13) de la cellule de commutation de phase (10) est relié avec le point de liaison du troisième commutateur semiconducteur de puissance bidirectionnel commandable (22) avec le quatrième deuxième commutateur semiconducteur de puissance bidirectionnel commandable (21) de la n-ième cellule de commutation supplémentaire (1.n).

8. Circuit convertisseur statique selon la revendication 6 ou 7, **caractérisé en ce que** le cinquième et le sixième commutateur semiconducteur de puissance bidirectionnel commandable (15, 16) de la cellule de commutation de phase (10) sont reliés entre eux.

9. Circuit convertisseur statique selon la revendication 6 ou 7, **caractérisé en ce que** la cellule de commutation de phase (10) présente un septième et un huitième commutateur semiconducteur de puissance bidirectionnel commandable (17, 18) ainsi qu'un condensateur (19),
que le condensateur (19) de la cellule de commutation de phase (10) est reliée avec le cinquième et le sixième commutateur semiconducteur de puissance bidirectionnel commandable (15, 16) de la cellule de commutation de phase (10),
que le septième commutateur semiconducteur de puissance bidirectionnel commandable (17) de la cellule de commutation de phase (10) est relié avec le point de liaison du condensateur (19) de la cellule de commutation de phase (10) avec le cinquième commutateur semiconducteur de puissance bidirectionnel commandable (15) de la cellule de commutation de phase (10) et le huitième commutateur semiconducteur de puissance bidirectionnel commandable (18) de la cellule de commutation de phase (10) est relié au point de liaison du condensateur (19) de la cellule de commutation de phase (10) avec le sixième commutateur semiconducteur de puissance bidirectionnel commandable (16) de la cellule de commutation de phase (10), et
que le septième et le huitième commutateur semiconducteur de puissance bidirectionnel commandable (17, 18) de la cellule de commutation de phase (10) sont reliés entre eux.

10. Circuit convertisseur statique selon la revendication 6, **caractérisé en ce qu'**une cellule de commutation de phase (10) est prévue pour chaque phase (R, S, T),
que le premier commutateur semiconducteur de puissance bidirectionnel commandable (11) de chaque cellule de commutation de phase (10) est relié avec le premier accumulateur d'énergie capacitif (8) de la cellule de commutation (1), et
que le deuxième commutateur semiconducteur de puissance bidirectionnel commandable (12) de chaque cellule de commutation de phase (10) est relié avec le point de liaison du sixième commutateur semiconducteur de puissance bidirectionnel commandable (7) avec le deuxième commutateur semiconducteur de puissance bidirectionnel commandable (3) de la cellule de commutation (1),
que le quatrième commutateur semiconducteur de puissance bidirectionnel commandable (14) de chaque cellule de commutation de phase (10) est relié avec le deuxième accumulateur d'énergie capacitif (9) de la cellule de commutation (1), et
que le troisième commutateur semiconducteur de puissance bidirectionnel commandable (13) de chaque cellule de commutation de phase (10) est relié avec le point de liaison du cinquième commutateur semiconducteur de puissance bidirectionnel commandable (6) avec le quatrième commutateur semiconducteur de puissance bidirectionnel commandable (5) de la cellule de commutation (1).

11. Circuit convertisseur statique selon la revendication 7, **caractérisé en ce qu'**une cellule de commutation de phase (10) est prévue pour chaque phase (R, S, T),
que le premier commutateur semiconducteur de puissance bidirectionnel commandable (11) de chaque cellule de commutation de phase (10) est relié avec le premier accumulateur d'énergie capacitif (8) de la cellule de commutation (1),
que le deuxième commutateur semiconducteur de puissance bidirectionnel commandable (12) de chaque cellule de commutation de phase (10) est relié avec le point de liaison du quatrième commutateur semiconducteur de puissance bidirectionnel commandable (23) avec le premier commutateur semiconducteur de puissance bidirectionnel commandable (20) de la n-ième cellule de commutation supplémentaire (1.n), et
que le quatrième commutateur semiconducteur de puissance bidirectionnel commandable (14) de chaque cellule de commutation de phase (10) est relié avec le deuxième accumulateur d'énergie capacitif (9) de la cellule de commutation (1), et
que le troisième commutateur semiconducteur de puissance bidirectionnel commandable (13) de chaque cellule de commutation de phase (10) est relié avec le point de liaison du troisième commutateur semiconducteur de puissance bidirectionnel commandable (22) avec le deuxième commutateur semiconducteur de puissance bidirectionnel commandable (21) de la n-ième cellule de commutation supplémentaire (1.n).

12. Circuit convertisseur statique selon l'une des revendications 6 à 11, **caractérisé en ce que** le premier, le deuxième, le troisième et le quatrième commutateur semiconducteur de puissance bidirectionnel commandable (11, 12, 13, 14) de la cellule de commutation de phase (10) présentent respectivement au moins deux éléments de commutation bidirectionnels commandables, les éléments de commutation bidirectionnels commandables étant branchés en série.
